**Europäisches Patentamt**

**European Patent Office**

**Office européen des brevets**

(19)

(11) Veröffentlichungsnummer: **0 250 784 B1**

(12) **EUROPÄISCHE PATENTSCHRIFT**

(45) Veröffentlichungstag der Patentschrift: **01.04.92**

(51) Int. Cl.5: **C01G 19/02**, C01G 19/00, C01G 5/00

(21) Anmeldenummer: **87106611.4**

(22) Anmeldetag: **07.05.87**

(54) **Verfahren zur Herstellung einer hochkonzentrierten wässrigen Silber- und Zinnsalze enthaltenden Suspension.**

(30) Priorität: **26.06.86 DE 3621398**

(43) Veröffentlichungstag der Anmeldung:
**07.01.88 Patentblatt 88/01**

(45) Bekanntmachung des Hinweises auf die Patenterteilung:
**01.04.92 Patentblatt 92/14**

(84) Benannte Vertragsstaaten:
**CH FR GB LI NL SE**

(56) Entgegenhaltungen:
**DE-C- 2 929 630**
**US-A- 4 150 982**

(73) Patentinhaber: **DORNIER GMBH**
**Postfach 1420**
**W-7990 Friedrichshafen 1(DE)**

(72) Erfinder: **Wulf, Kock, Dr. Dipl.-Chem.**
**Rannenbergring 9**
**W-8755 Alzenau-Kaelberau(DE)**
Erfinder: **Wolfgang, Wagner, Chem. Ing.**
**Urnau 58**
**W-7774 Deggenhausertal(DE)**

(74) Vertreter: **Landsmann, Ralf, Dipl.-Ing.**
**DORNIER GMBH - Patentabteilung - Kleeweg 3**
**W-7990 Friedrichshafen 1(DE)**

## Beschreibung

Die Erfindung betrifft ein Verfahren zur Herstellung einer hochkonzentrierten wässrigen Silber- und Zinnsalze enthaltenen Suspension, aus der Verbundpulver aus Silber- und Zinnoxid mit Hilfe des Reaktionssprühverfahrens herstellbar sind.

Aus der DE-C-29 29 630 ist ein Reaktionssprühverfahren zur Herstellung von Silberpulver bekannt, bei welchem Silberpulver der Zusammensetzung Ag/CdO für elektrische Kontakte durch Einsprühen einer wässrigen Lösung von Silber- und Cadmiumsalze in einem heißen Reaktor hergestellt und die dabei entstehenden Pulverteilchen nach Reaktion mit der Reaktoratmosphäre in einem Zentrifugalabscheider aus dem heißen Gasstrom abgetrennt und gesammelt werden.

Aufgabe der Erfindung ist es, ein Verfahren anzugeben, mit welchem hochkonzentrierte und hochdisperse Mischungen (Lösungen) von Silber- und Zinnverbindungen erzeugt werden können, um daraus mittels der Reaktionssprühtechnik durch Feinverteilung dieser Lösungen über Ein- oder Zweistoffdüsen Verbundpulver aus Silber- und Zinnoxid herstellen zu können.

Die Lösung der gestellten Aufgabe besteht darin, daß das Verfahren dadurch **gekennzeichnet** ist, daß zunächst eine aus einer Zinn (II)-Salzlösung bestehende Impfsuspension durch deren portionsweises Einbringen in ein möglichst kleines Volumen konzentrierter Salpetersäure bei stetiger Einhaltung einer Temperatur unterhalb von 35° C hergestellt wird und anschließend die Impfsuspension zusammen mit etwa dem dreifachen Volumen an konzentrierter 65 %iger Salpetersäure portionsweise in einem, eine wässrige Citratlösung und Zinngranalien enthaltenden Rührgefäß gegeben wird, bis alle Zinngranalien aufgelöst und in eine Zinn (IV)-Oxidhydrat-Suspension umgewandelt sind und dann die fertige Zinn (IV)-Oxidhydrat Suspension mit einer wässrigen Silbernitratlösung vereinigt wird.

Vorteilhafte Weiterbildungen ergeben sich aus den Unteransprüchen.

Als preisgünstige Verbindungen kommen nur anorganische Verbindungen als Salze in Frage. Für Verbundpulver mit hohem Silbergehalt, wie sie z. B. zur Herstellung von Kontaktwerkstoffen benötigt werden, können hochkonzentrierte Lösungen praktisch nur mit Hilfe von Silbernitrat als Silberverbindung hergestellt werden. Dabei kann das Silbernitrat sowohl direkt als Salz eingesetzt, als auch aus den Metallgranalien des Silbers un Salpetersäure hergestellt werden. Aufgrund der Neigung der Silberionen, schwerlösliche Niederschläge mit einer großen Zahl von Anionen zu bilden, kommen als Zinnverbindungen nur solche Verbindungen in Frage, deren Anion bei den gewählten Konzentrationen zusammen mit dem Silberion noch nicht das Löslichkeitsprodukt des betreffenden Silbersalzes überschreitet, oder die nicht nennenswert in Ionen dissoziieren. Zusätzlich ist bei der Verwendung von Zinnverbindungen, in denen das Zinn zweiwertig enthaltenist, darauf zu achten, daß keine Redoxreaktionen zwischen den $Sn^{2+}$-Ionen und den $Ag^+$-Ionen unter Bildung von elementarem Silber und Zinn (IV)-Verbindungen erfolgt. Aufgrund der Lage der Redoxpotentiale ist eine Redroxreaktion nur bei sehr geringen Konzentrationen der Redoxpartner zu vermeiden. Diese geringen Konzentrationen werden erreicht, entweder durch geringe gelöste Stoffmengen oder durch Komplexierung mindestens einer der an der Redoxreaktion beteiligten Ionensorten. Die Komplexierung des Silberions kann z. B. über den Silberdiamino-, Dizyano- oder Dithiosulfat- Komplex erfolgen. Derartige Komplexe erreichen allerdings nicht eine so hohe Silberkonzentration, wie das außerordentlich gut lösbare Silbernitrat. Übliche und bekannte Komplexe sowohl für das zweiwertige als auch für das vierwertige Zinn sind die Chloro-und Hydroxidkomplexe. Beide Komplexe können aber aus naheliegenden Gründen nicht in Gegenwart von Silberionen eingesetzt werden. Allerdings erlaubt die Stabilität der Acetatkomplexe des zweiwertigen Zinns in Verbindung mit einer moderaten Löslichkeit des Silberacetats die Verwendung dieses Komplexes als Anorganische Zinnverbindung. Zinnacetat kann dabei aus Zinnpulver und Essigsäure in Gegenwart einer ausreichenden Menge einer starken Säure mit einem pk ≤ 1,5 in ausreichender Konzentration hergestellt werden. Geeignet sind Mineralsäuren, die mit Silberionen keine schwerlöslichen Niederschläge bilden, wie z. B. Salpetersäure oder substituierte Karbonsäuren wie z. B. Di- oder Trichloressigsäure. Die Verwendung einer oxidierenden Säure, wie Salpetersäure setzt das Einhalten bestimmter Konzentrations- und Temperaturgrenzen voraus, um die Weiteroxidation des gebildeten zweiwertigen zum vierwertigen Zinn zu verhindern. Die Salpetersäure-Konzentration sollte nicht höher als 3-molar und die Temperatur nicht wesentlich höher als Raumtemperatur sein, um die unerwünschte Weiteroxidation des zweiwertigen Zinns zu vermeiden. Eine Schwierigkeit ist dabei, daß durch die Oxidation eine Erwärmung der Lösung erfolgt, so daß bei den erforderlichen hohen Konzentrationen ein einmaliges kurzes Überschreiten der maximal zulässigen Grenzwerte bezüglich Temperatur oder Konzentration zu einer spontanen Durchreaktion des gesamten Lösungsansatzes führt. Da beim Lösungsprozeß Erwärmung vermieden werden muß, kann die Auflösung des Zinnpulvers durch Passivschichten behindert sein. Die Auflösung kann in diesem Fall eingeleitet werden, wenn unmittelbar vor Gebrauch das Zinnpulver in einer Schlagkreuzmühle kurz aufgemahlen wird.

Mit Hilfe des Zinnacetatkomplexes lassen sich Zinnlösungen herstellen, die etwa 0,5-molar bezüglich des Zinns sind. Je nach dem gewünschten Verhältnis von Silber zu Zinn können auf diese Weise hochkonzentrierte sprühfähige Ansätze zur Herstellung von Verbundpulvern aus Silber- und Zinndioxid nach der Reaktionssprühtechnik gewonnen werden. Es gelingt auf diese Weise, pro Liter zerstäubten Ansatz etwa 400 g Verbundpulver mit einer Zusammensetzung von 90 Gew. % Silber und 10 Gew. % Zinndioxid zu erhalten.

Der Ansatz bildet nur bei sehr geringen Konzentrationen eine Lösung. Bei höheren Konzentrationen, etwa ab 50 g Pulver ausbeute pro Liter, färbt sich der Ansatz beim Vereinigen der Silber- und Zinnlösung über Zwischenstufen unter Ausbildung einer sehr stabilen Suspension schwarz.

Sollen Ansätze mit höheren Pulverausbeuten pro Liter hergestellt warden, gelingt dies nicht über Zinn (II)-acetate. Nach kurzem Stehen scheidet der Ansatz aus den vereinigten Silber- und Zinnlösungen einen weißen Niederschalg aus, der sich absetzt.

Für den Fall noch höherer Konzentrationen bieten sich daher Suspensionen an, die das Zinn im vierwertigen Zustand enthalten. Wird die Lösung des Zinn (II)-acetats portionsweise in ein kleines Volumen konzentrierte Salpetersäure eingebracht und hält die Temperatur bei 40° C, so entsteht eine fein disperse Suspension aus rein weißem Zinnoxidhydrat. Überschreitet die Temperatur 40° C, so wird der Ansatz grau und erstarrt zu einem Gel. In diesem Zustand ist er für eine Weiterverwendung mit Hilfe der Reaktionssprühtechnik nicht mehr verwendbar.

Die durch Eingießen der Zinn (II)-acetatlösung in Salpetersäure gewonnene Suspension wird als Impfsuspension bei der Herstellung von weiterem Zinnoxidhydrat verwendet. Ohne die Impfsuspension erfolgt bei der folgenden Prozedur zunächst eine Auflösung ohne Suspensionsbildung. Nach einer Induktionsperiode von 5 bis 10 Minuten erfolgt dann spontan die Ausbildung eines grau-weißen Niederschlags, der sich unter großer Wärmeentwicklung bildet. Dieser Niederschlag läßt den Ansatz zu einem Gel erstarren, das aufgrund der anhaltenden hohen Wärmeentwicklung unter heftiger Blasenbildung verspritzt. In Gegenwart der Impfsuspension bildet sich hingegen sofort eine weiße Suspension und die plötzlich stark exotherme Reaktion mit gleichzeitiger Gelbildung unterbleibt, sofern die Temperatur nicht weit über 40° C steigt. Bei zu hohen Reaktionstemperaturen erfolgt auch in Gegenwart der Impfsuspension die spontane exotherme Reaktion in Verbindung mit der Gelbildung. In Gegenwart von Zitronensäure wird erfindungsgemäß die gebildete Suspension besondders feinteilig. Auf diese Weise wird erreicht, daß sich die Suspension in Düsen mit sehr feinem Tropfenspektrum vernebeln läßt. Durch Zugabe der Suspension zu einer Silbernitratlösung hoher Konzentration wird zweierlei erreicht:

zum einen wird das Sedimentieren der suspentierten Partikel aufgrund der hohen Dichte ($\rho$ = 2 ) der Silbernitratlösung verlangsamt, zum anderen dringt die Silberlösung in die lockere Struktur der Zinnoxidhydrat-Partikel ein und bewirkt eine Durchdringung der beiden Komponenten, so daß die Elementverteilung deutlich feiner ist als bei einer Suspension von Zinndioxid-Partikeln in einer Silbernitratlösung.

Nach dem erfindungsgemäßen Verfahren können Suspensionen hergestellt werden, die pro Liter eine Ausbeute von 690 g Verbundpulver mit der Zusammensetzung 90 Gew. % Silber und 10 Gew. % Zinndioxid liefern.

Beispiel 1:

In ein 2-liter Becherglas werden 900 g Silbergranalien und 245 ml demineralisiertes Wasser verlegt. Der Inhalt wird auf 80° C erwärmt. Unter Rühren werden in das Becherglas 770 ml einer 65 %igen Salpetersäure langsam zugetropft. Nach Beendigung des Zustropfens wird noch bis zur vollständigen Lösung der Silbergranalien gerührt. Die Lösung wird bis zur Vereinigung mit der folgend beschriebenen Zinnoxid-Suspesion auf Temperatur gehalten.

Zur Bereitung der Zinnoxid-Suspension wird zunächst eine Impfsuspension hergestellt. Eine Mischung aus 200 ml demineralisiertem Wasser, 160 ml 96 %ige Essigsäure und 80 ml 65 %ige Salpetersäure werden auf 10° C gekühlt. In die Mischung werden unter starkem Rühren portionsweise 31 g Zinnpulver zugegeban. Zinnpulver, die aufgrund einer starken Passivschicht sich nur träge oder garnicht lösen, werden unmittelbar vor der Zugabe etwa 1 Minute in einer Schlagkreuzmühle gemahlen. Nach Beendigung der Zugabe des Zinnpulvers ist die Temperatur der Lösung auf 20° C angestiegen, wobei sie eine gelblich- grüne Färbung aufweist. Die Lösung wird unter starkem Rühren langsam in 10 mil 65 %ige Salpetersäure eingetropft, wobei die Reaktionstemperatur 40° C möglichst nicht überschreiten darf. Nach Beendigung des Zutropfens ist eine rein weiße Suspension entstanden, die als Impfsuspension zur Herstellung einer noch höher konzentrierten Zinnoxidsuspension eingesetzt werden kann. Diese hochkonzentrierte Suspension wird hergestellt, indem eine Mischung von 125 ml demineralisiertem Wasser, 13 g Zitronensäure-1-Hydrat und 74,6 g Zinngranalien vorgelegt wird und dazu unter Rühren eine Mischung aus 60 ml der vorbeschriebenen Impfsuspension mit 200 ml 65 %iger Salpetersäure getropft wird. Auch hierbei ist die Zugabe so zu bemessen, daß die Temperatur in der Vorlage nicht über 40° C ansteigt, wobei bis zur vollständigen Auflösung der Zinngranalien gerührt wird, die etwa nach 6 Stunden erfolgt ist. Die hier beschriebene Zinnoxid-Suspension wird mit der warmen Silbernitratlösung vereinigt. Sie enthält pro Liter Silber- und Zinnverbindungen für 690 g Pulver der Zusammensetzung Silber/Zinndioxid 90 Gew. %/10 Gew. %. Zur Vermeidung einer Entmischung während der Verarbeitung mittels der Reaktionssprühtechnik muß die Suspension gerührt werden.

Beispiel 2 :

In demineralisiertem Wasser werden 44,9 g Silbernitrat (entsprechend einer Silbermenge von 28,5 g) gelöst und das Volumen nach der Auflösung auf 540 ml eingestellt.
Eine Zinnsalzlösung wird hergestellt, indem 2,5 g Zinnpulver in einer Mischung aus 146,8 ml demineralisiertem Wasser, 73,5 ml 96 %ige Essigsäure und 37,7 ml 65 % Salpetersäure aufgelöst wird. Bei einer starken Passivschichtbildung auf den Pulverpartikeln muß das Zinnpulver etwa 1 Minute in einer Schlagkreuzmühle gemahlen werden. Nach Beendigung der Auflösung wird die Silbernitratlösung mit der Zinnlösung vereinigt, wobei eine klare Lösung entsteht, die pro Liter Silber- und Zinnsalze für 40 g Pulver Silber/Zinndioxid der Zusammensetzung 90 Gew.%/10 Gew.% enthält.

Beispiel 3 :

Es wird nach Beispiel 2 eine gleiche Menge Lösungsmittel aber mit 10-facher Metallkonzentration hergestellt, wobei 449,8 g Silbernitrat aufgelöst werden und auf 540 ml eingestellt wird. Die Zinnsalzlösung wird durch Zugabe von 25 g Zinnpulver zu einer Mischung aus 146,8 ml deminseralisiertem Wasser, 73,5 ml 96 %ige Essigsäure und 37,7 ml 65 %ige Salpetersäure hergestellt. Falls erforderlich, wird das Zinnpulver etwa eine Minute in einer Schlagkreuzmühle gemahlen.
Es ist dabei unerläßlich, das Zinnpulver in so geringen Mengen zuzugeben, daß die Temperatur unter 40° C bleibt. Nach Beendigung der Zugabe des Zinnpulvers wird noch etwa eine halbe Stunde gerührt, wonach die Reaktion abgeschlossen ist und die Lösung eine gelb-grüne Farbe aufweist.
In die Silbernitratlösung wird unter starken Rühren die Zinnsalzlösung eingetropft oder in dünnem Strahl eingegossen. Während der Zugabe der Lösung ändert sich die Farbe der Vorlage von farblos-hellgrün-braun bis schwarz, wobei die Farben bis braun noch eine klare Lösung bezeichnen. Die schwarze Farbe ist dann Kennzeichen für eine sprühfertige, sehr feinteilige und stabile Suspension.

## Patentansprüche

1. Verfahren zur Herstellung einer hochkonzentrierten wässrigen Silber- und Zinnsalze enthaltenden Suspension, aus der Verbundpulver aus Silber- und Zinnoxid mit Hilfe des Reaktionssprüh-Verfahrens herstellbar sind, **dadurch gekennzeichnet**, daß zunächst eine aus einer Zinn (II)-Salzlösung bestehende Impfsuspension durch deren portionsweises Einbringen in ein möglichst kleines Volumen konzentrierter Salpetersäure bei stetiger Einhaltung einer Temperatur unterhalb von 35° C hergestellt wird und anschließend die Impfsuspension zusammen mit etwa dem dreifachen Volumen an konzentrierter 65 %iger Salpetersäure portionsweise in einem, eine wässrige Citratlösung und Zinngranalien enthaltenden Rührgefäß gegeben wird, bis alle Zinngranalien aufgelöst und in eine Zinn (IV)-Oxid-hydrat-Suspension umgewandelt sind und dann die fertige Zinn (IV)-Oxidhydrat Suspension mit einer wässrigen Silbernitratlösung vereinigt wird.

2. Verfahren nach Anspruch 1, dadurch gekennzeichnet, daß die Impfsuspension aus einer Zinn (II)-Salzösung hergestellt wird, welche aus einer wässrigen Lösung von Salpetersäure und Essigsäure besteht, in die unter Rühren portionsweise Zinnpulver eingestreut wird, wobei die Zugabe des Zinnpulvers bei so niedriger Temperatur erfolgt, daß eine Weiteroxidation der Zinn (II)-Salze zu Zinn (IV)-Verbindungen vermieden wird.

3. Verfahren nach Anspruch 1, dadurch gekennzeichnet, daß das Molverhältnis von Essigsäure zu Salpetersäure zwischen 5:1 und 1:2, vorzugsweise bei 2:1 liegt.

4. Verfahren nach Anspruch 2, dadurch gekennzeichnet, daß eine auf der Oberfläche der Zinngranalien vorhandene Passivschicht unmittelbar vor der Zugabe durch Aufmahlen mittels einer Schlagkreuzmühle aufgebrochen wird.

5. Verfahren nach Anspruch 2, dadurch gekennzeichnet, daß die Zugabe des Zinnpulvers bei einer Temperatur von maximal 25° C erfolgt.

6. Verfahren nach Anspruch 2, dadurch gekennzeichnet, daß Löserückstände durch Abdekantieren oder Abzentrifugieren entfernt werden.

**7.** Verfahren nach Anspruch 1, dadurch gekennzeichnet, daß die Zinn (II)-Salzlösung zur Herstellung der Impfsuspension 70 g Zinnionen pro Liter Lösung enthält.

**8.** Verfahren nach den Ansprüchen 1 und 7, dadurch gekennzeichnet, daß pro Liter Zinn (II)-Salzlösung 22 ml 65 %ige Salpetersäure zur Herstellung der Impfsuspension vorgelegt werden.

**9.** Verfahren nach Anspruch 1, dadurch gekennzeichnet, daß die Citratlösung 10 % Zitronensäurehydrat enthält.

**10.** Verfahren nach den Ansprüchen 1 und 9, dadurch gekennzeichnet, daß das Massenverhältnis von Zinngranalien zu Zitronensäure-1-hydrat zwichen 10:1 und 3:1, vorzugsweise bei 6:1 liegt.

**11.** Verfahren nach Anspruch 1, dadurch gekennzeichnet, daß die Zugabe der aus Impfsuspension und Salpetersäure beratur zwischen 30°C und 50°C, vorzugsweise bei 40°C erfolg.

**12.** Verfahren nach den Ansprüchen 1 und 7 bis 10, dadurch gekennzeichnet, daß die Zinn (IV)-Oxidhydrat-Suspension vor dem Vereinigen mit der Silbernitratlösung eine Konzentration von 1,66 Mol Zinn pro Liter aufweist.

**13.** Verfahren nach Anspruch 1, dadurch gekennzeichnet, daß die Zinn (II)-Salzlösung ohne vorherige Umwandlung in eine Suspension direkt mit der wässrigen Silbernitratlösung vereinigt wird.

**14.** Verfahren nach Anspruch 13, dadurch gekennzeichnet, daß die Zinn (II)-Salzlösung vor dem Vereinigen mit der wässrigen Silbernitratlösung eine Konzentration von maximal 0,6 Mol Zinn pro Liter aufweist.

**15.** Verfahren nach den Ansprüchen 1 und 13, dadurch gekennzeichnet, daß die Zinnverbindungen mit einer Silbernitratlösung vereinigt werden, wobei durch Auflösen von Silbergranalien oder -Körnern in etwa 50 %iger Salpetersäure bei 80°C ein Molverhältnis von Salpetersäure zu Silber von etwa 1,4:1 hergestellt wird.

**Claims**

**1.** Process for preparing a highly concentrated aqueous suspension containing silver and tin salts from which composite powder of silver and tin oxide can be prepared by means of the reaction spraying process, characterised in that firstly a seeding suspension comprising a tin (II) salt solution is prepared by introducing the latter batchwise into a volume of concentrated nitric acid which is as small as possible whilst the temperature is constantly maintained below 35°C and subsequently the seeding suspension is added together with approximately three times the volume of concentrated 65% nitric acid batchwise in an agitating vessel containing an aqueous citrate solution and tin pellets until all the tin pellets are dissolved and converted into a tin (IV) oxide hydrate suspension and then the prepared tin (IV) oxide hydrate suspension is purified with an aqueous sulphur nitrate solution.

**2.** Process according to claim 1, characterised in that the seeding suspension is prepared from a tin (II) salt solution which comprises an aqueous solution of nitric acid and acetic acid into which tin powder is scattered batchwise whilst being agitated, the tin powder being added at such a low temperature that further oxidation of the tin (II) salts to form tin (IV) compounds is avoided.

**3.** Process according to claim 1, characterised in that the molar ratio of acetic acid to nitric acid is between 5:1 and 1:2 and is preferably 2:1.

**4.** Process according to claim 2, characterised in that a passive layer on the surface of the tin pellets is broken up by being ground up by means of a cross beciter mill immediately before being added.

**5.** Process according to claim 2, characterised in that the tin powder is added at a temperature of 25°C maximum.

**6.** Process according to claim 2, characterised in that residues from the dissolution process are removed by decanting or centrifuging off.

**7.** Process according to claim 1, characterised in that the tin (II) salt solution for preparing the seeding suspension contains 70 g tin ions per litre of solution.

**8.** Process according to claims 1 and 7, characterised in that 22 ml 65% nitric acid is used per litre of tin (II) salt solution for preparing the seeding suspension.

**9.** Process according to claim 1, characterised in that the citrate solution contains 10% citric acid hydrate.

**10.** Process according to claims 1 and 9, characterised in that the mass ratio of tin pellets to citric acid-1-hydrate is between 10:1 and 3:1 and is preferably 6:1.

**11.** Process according to claim 1, characterised in that the mixture comprising a seeding suspension and nitric acid is added to the tin pellets at a temperature of between 30°C and 50°C and preferably at 40°C.

**12.** Process according to claims 1 and 7 to 10, characterised in that the tin (IV) oxide hydrate suspension comprises a concentration of 1.66 mole of tin per litre before being purified with silver nitrate solution.

**13.** Process according to claim 1, characterised in that the tin (II) salt solution is purified directly with aqueous silver nitrate solution without previously being converted into a suspension.

**14.** Process according to claim 13, characterised in that the tin (II) salt solution comprises a concentration of a mixture of 0.6 moles of tin per litre before being purified with aqueous silver nitrate solution.

**15.** Process according to claims 1 and 13, characterised in that the tin compounds are purified with a silver nitrate solution, a molar ratio of nitric acid to silver of approximately 1.4:1 being produced by dissolving silver pellets or grains in approximately 50% nitric acid at 80°C.

**Revendications**

**1.** Procédé de préparation d'une suspension aqueuse hautement concentrée contenant des sels d'argent et d'étain à partir de laquelle des poudres composées d'oxyde d'argent et d'étain peuvent être obtenues à l'aide du procédé de pulvérisation réactive, **caractérisé en ce** qu'une suspension d'inoculation constituée d'une solution de sel stanneux est tout d'abord préparée par l'introduction portionnée de cette dernière dans un volume aussi petit que possible d'acide nitrique concentré, avec en permanence maintien d'une température inférieure à 35°C, que la suspension d'inoculation est ensuite introduite par portions, conjointement avec environ le triple du volume d'acide nitrique concentré à 65 % dans un bac à agitation contenant une solution aqueuse de citrate et des grenailles d'étain jusqu'à ce que toutes les grenailles d'étain soient dissoutes et transformées en une suspension d'hydroxyde stannique et que la suspension d'hydroxyde stannique terminée est ensuite combinée avec une solution aqueuse de nitrate d'argent.

**2.** Procédé selon la revendication 1, caractérisé en ce que la suspension d'inoculation est préparée à partir d'une solution de sel stanneux laquelle est composée d'une solution aqueuse d'acide nitrique et d'acide acétique dans laquelle est introduite par portions et en agitant de la poudre d'étain, l'addition de la poudre d'étain s'effectuant à une température suffisamment faible pour éviter une oxydation supplémentaire des sels stanneux en composés stanniques.

**3.** Procédé selon la revendication 1, caractérisé en ce que le rapport molaire entre l'acide acétique et l'acide nitrique se situe entre 5:1 et 1:2, de préférence à 2:1.

**4.** Procédé selon la revendication 2, caractérisé en ce qu'une couche de passivation recouvrant la surface des grenailles d'étain est déchirée immédiatement avant l'addition, par broyage au moyen d'un broyeur à battoirs.

**5.** Procédé selon la revendication 2, caractérisé en ce que l'addition de poudre d'étain s'effectue à une température maximale de 25°C.

**6.** Procédé selon la revendication 2, caractérisé en ce que les résidus de dissolution sont éliminés par décantation ou par centrifugation.

**7.** Procédé selon la revendication 1, caractérisé en ce que la solution de sel stanneux pour la préparation de la suspension d'inoculation contient 70 g d'ions d'étain par litre de solution.

**8.** Procédé selon l'une des revendications 1 et 7, caractérisé en ce que pour un titre de solution de sel stanneux, 22 ml d'acide nitrique à 65 % sont mis en oeuvre pour la préparation de la suspension d'inoculation.

**9.** Procédé selon la revendication 1, caractérisé en ce que la solution de citrate contient 10 % d'acide citriquehydrate.

**10.** Procédé selon l'une des revendications 1 et 9, caractérisé en ce que la proportion des masses de grenailles d'étain et de l'acide citrique-1-hydrate se situe entre 10:1 et 3:1; de préférence à 6:1.

**11.** Procédé selon la revendication 1, caractérisé en ce que l'addition du mélange de suspension d'inoculation et d'acide nitrique aux grenailles d'étain se fait à une température comprise entre 30°C et 50°C, de préférence de 40°C.

**12.** Procédé selon l'une des revendications 1 et 7 à 10, caractérisé en ce que, avant la combinaison avec la solution de nitrate d'argent, la suspension d'hydroxyde stannique présente une concentration de 1,66 mol d'étain par litre.

**13.** Procédé selon la revendication 1, caractérisé en ce que la solution de sel stanneux est directement combinée, sans transformation préalable en une suspension, avec la solution aqueuse de nitrate d'argent.

**14.** Procédé selon la revendication 13, caractérisé en ce que, avant la combinaison avec la solution de nitrate d'argent, la solution de sel stanneux présente une concentration maximale de 0,6 mol d'étain par litre.

**15.** Procédé selon l'une des revendications 1 et 13, caractérisé en ce que les composés d'étain sont combinés avec une solution de nitrate d'argent, un rapport molaire entre l'acide nitrique et l'argent d'environ 1,4:1 étant établi par dissolution de grenailles ou de grains d'argent dans de l'acide nitrique à environ 50 % à 80°C.